(19) Europäisches Patentamt
European Patent Office
Office européen des brevets

(11) EP 2 993 778 A1

(12) EUROPEAN PATENT APPLICATION

(43) Date of publication:
09.03.2016 Bulletin 2016/10

(51) Int Cl.:
H02P 5/74 (2006.01)    H02P 27/08 (2006.01)
F24F 1/00 (2011.01)

(21) Application number: 15181467.0

(22) Date of filing: 18.08.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 08.09.2014  JP 2014182089

(71) Applicant: MITSUBISHI HEAVY INDUSTRIES, LTD.
Tokyo 108-8215 (JP)

(72) Inventors:
• KANIE, Tetsuo
MINATO-KU, TOKYO, 108-8215 (JP)
• ADACHI, Naoya
MINATO-KU, TOKYO, 108-8215 (JP)

(74) Representative: Intès, Didier Gérard André et al
Cabinet Beau de Loménie
158, rue de l'Université
75340 Paris Cedex 07 (FR)

(54) **MOTOR CONTROLLING APPARATUS AND MOTOR CONTROLLING METHOD**

(57)    An object is to allow, when a plurality of motors having different maximum output torques are employed in combination, the individual motors to exhibit their capacities thereof as fully as possible while suppressing a deterioration in the responsiveness of the rotational speed. A motor controlling apparatus includes a duty-setting portion (21) that sets duties of a first motor and a second motor, a state-judging portion (22) that judges states of the first and the second motors, a rotational-speed-instruction changing portion (23) that changes a rotational-speed instruction for the first motor, and a driving-instruction generating portion (24) that sets a duty for the first motor based on the changed rotational-speed instruction and sets, for the second motor, a duty that is equal to or less than the second saturation value which is set close to a duty value at which the rotational speed of the second motor becomes saturated.

FIG. 2

**Description**

Technical Field

The present invention relates to a motor controlling apparatus and a motor controlling method.

{Background Art}

In the related art, as indoor units for air-conditioning systems that cover large areas such as stores, offices, or the like, there are known air-conditioning systems that accommodate a plurality of blowers provided with fans and fan motors that drive the fans (for example, see Patent Literature 1). In such blowers, the individual fan motors are driven by motor driving circuits.

The motor driving circuits are provided with, for example, inverters and gate drivers that drive the inverters, and the gate drivers drive the inverters based on drive voltage instructions from a controlling apparatus, thus converting DC voltages to desired three-phase AC voltages to be supplied to the fan motors.

Citation List

Patent Literature

PTL 1 Japanese Unexamined Patent Application, Publication No. 2013-174371

Summary of Invention

Technical Problem

In the case in which a plurality of fan motors are accommodated in an air-conditioning system, in recent years, there has been a demand for combined use of fan motors with different specifications for reasons related to the accommodating space therefor, adoption of existing models, or the like. However, in the case in which such fan motors with different specifications are combined, problems such as those described below may occur with conventional motor control.

For example, in the case in which two fan motors having different maximum output torques are combined (hereinafter, the fan motor having a higher maximum output torque will be referred to as the "first motor", and the fan motor having a lower maximum output torque will be referred to as the "second motor"), when a maximum rotational-speed instruction is given during high-load operation, although the first motor can reach the maximum rotational-speed instruction, the second motor cannot reach the speed specified by the maximum rotational-speed instruction. At this time, the second motor can be assumed to have entered a state in which the rotational speed thereof does not change even if the drive-voltage instruction (duty) is increased (saturated state); with the conventional motor control, however, the drive-voltage instruction (duty) continues to be increased toward 100 % due to feedback control that decreases a deviation between the actual rotational speed of the second motor and the maximum rotational-speed instruction therefor.

Then, if a rotational-speed instruction for decreasing the rotational speed is input in such a state, it will take time to decrease the duty of the second motor to a level in accordance with that rotational-speed instruction, which in turn causes a deterioration in the responsiveness to the rotational-speed instruction.

In order to prevent the responsiveness to the rotational-speed instruction from deteriorating in this way, it is necessary to control the duty of the second motor so that saturation does not occur. However, in that case, it is necessary to set the rotational-speed instruction in accordance with the lower rotational-speed characteristics of the second motor, and thus, it is not possible to allow the first motor to fully exhibit its capacity.

The present invention has been conceived in light of the above-described circumstances, and an object thereof is to provide a motor controlling apparatus and a motor controlling method with which, in the case in which a plurality of motors having different maximum output torques are employed in combination, it is possible to allow the individual motors to exhibit their capacities as fully as possible while suppressing a deterioration in the responsiveness of the rotational speed.

Solution to Problem

A first aspect of the present invention is a motor controlling apparatus employed in controlling a motor unit provided with a first motor and a second motor whose maximum output torque is lower than that of the first motor, the motor controlling apparatus including a duty-setting means configured to set a duty of the first motor by using information about a rotational-speed instruction and an actual rotational speed of the first motor and to set a duty of the second motor by using information about the rotational-speed instruction and an actual rotational speed of the second motor; a state-judging means configured to judge states of the first motor and the second motor by using the duty of the first motor, the duty of the second motor, a first saturation value that is set close to a duty value at which the rotational speed of the first motor becomes saturated, and a second saturation value that is set close to a duty value at which the rotational speed of the second motor becomes saturated; a rotational-speed-instruction changing means configured to increase the rotational-speed instruction for the first motor by a predetermined amount, in a case in which the duty of the first motor is less than the first saturation value, the duty of the second motor is equal to or greater than the second saturation value, and the actual rotational speed of the second motor has not reached the rotational-speed instruction; and a driving-instruction generating means configured to set, for the first motor, a duty based on the changed rotational-speed instruction and to set, for the second motor, a duty that is equal to or less than the second saturation value.

With the motor controlling apparatus according to this aspect, the duty-setting means sets the duty of the first motor by using the information about the rotational-speed instruction and the actual rotational speed of the first motor, and sets the duty of the second motor by using the information about the rotational-speed instruction and the actual rotational speed of the second motor. Then, the state-judging means judges the states of the first motor and the second motor by using the duty of the first motor and the duty of the second motor set by the duty-setting means, the first saturation value that is set close to the duty value at which the rotational speed of the first motor becomes saturated, and the second saturation value that is set close to the duty value at which the rotational speed of the second motor becomes saturated. Also, in the case in which the duty of the first motor is less than the first saturation value, the duty of the second motor is equal to or greater than the second saturation value, and the actual rotational speed of the second motor has not reached the rotational-speed instruction, the rotational-speed-instruction changing means increases the rotational-speed instruction for the first motor by the predetermined amount. Then, the driving-instruction generating means sets, for the first motor, a duty based on the changed rotational-speed instruction and sets, for the second motor, a duty that is equal to or less than the second saturation value.

With the motor controlling apparatus according to this aspect, in the case in which the duty of the first motor is less than the first saturation value, the duty of the second motor is equal to or greater than the second saturation value, and the actual rotational speed of the second motor has not reached the rotational-speed instruction, in other words, in the case in which the second motor is approaching the limit of its output torque and the output torque of the first motor still has an allowance before reaching its limit, the first motor is made to bear a portion of the torque load of the second motor. As a result, it is possible to increase the output of the first motor even in the case in which the second motor has approached its output limit, and thus, it is possible to avoid a situation in which the output of the first motor is suppressed due to the influence of the capacity of the second motor. Accordingly, it is possible to allow the first motor to realize an output at its full capacity.

Furthermore, because the driving-instruction generating means sets the duty of the second motor to a duty that is equal to or less than the second saturation value, it is possible to avoid a situation in which the duty of the second motor continues to be increased toward 100 %, as has conventionally been done. Accordingly, in the case in which the rotational-speed instruction is decreased, it is possible to decrease the duty so as to quickly follow the rotational-speed instruction, and it is possible to decrease the rotational speed of the second motor. By doing so, it is possible to suppress a deterioration in the rotational speed response.

In the above-described motor controlling apparatus, the rotational-speed-instruction changing means may decrease the rotational-speed instruction for the second motor by the predetermined amount, in a case in which the duty of the second motor is equal to or greater than the second saturation value and an actual rotational speed of the second motor has not reached the rotational-speed instruction, and the driving-instruction generating means may set, for the second motor, a duty based on the changed rotational-speed instruction.

With the above-described motor controlling apparatus, in the case in which the duty of the first motor is less than the first saturation value, the duty of the second motor is equal to or greater than the second saturation value, and the actual rotational speed of the second motor has not reached the rotational-speed instruction, the rotational-speed-instruction changing means increases the rotational-speed instruction for the first motor by the predetermined amount, and decreases the rotational-speed instruction for the second motor by the predetermined amount; and the driving-instruction generating means sets the duty of the first motor and the duty of the second motor based on the changed rotational-speed instructions.

In the above-described motor controlling apparatus, the rotational-speed-instruction changing means may decrease the rotational-speed instruction for the first motor by the predetermined amount and may increase the rotational-speed instruction for the second motor by the predetermined amount, in the case in which the duty of the first motor is equal to or greater than the first saturation value and the duty of the second motor is less than the second saturation value or in the case in which the duty of the first motor is equal to or greater than the first saturation value, the duty of the second motor is equal to or greater than the second saturation value, and the duty of the first motor is greater than the duty of the second motor.

With the above-described motor controlling apparatus, in the case in which the duty of the first motor is equal to or greater than the first saturation value and the duty of the second motor is less than the second saturation value or in the case in which the duty of the first motor is equal to or greater than the first saturation value, the duty of the second motor is equal to or greater than the second saturation value, and the duty of the first motor is greater than the duty of the second motor, in other words, in the case in which the first motor is made to bear an excess portion of the torque load of the second motor, the burden on the first motor is reduced by decreasing the duty of the first motor, and the burden on the second motor is increased by increasing the duty of the second motor. By doing so, it is possible to maintain a preferable load-distribution balance between the first motor and the second motor.

A second aspect of the present invention is a motor driving apparatus including one of the above-described motor controlling apparatuses; a first drive circuit that drives the first motor based on a driving instruction from the motor controlling apparatus; and a second drive circuit that drives the second motor based on a driving instruction from the motor controlling apparatus.

A third aspect of the present invention is an air conditioner including a motor unit provided with a first motor and a second motor whose maximum output torque is lower than that of the first motor; and the above-described motor driving apparatus.

A fourth aspect of the present invention is a motor controlling method applied to a motor unit provided with a first motor and a second motor whose maximum output torque is lower than that of the first motor, the motor controlling method including a duty setting step of setting a duty of the first motor by using information about a rotational-speed instruction and an actual rotational speed of the first motor and setting a duty of the second motor by using information about the rotational-speed instruction and an actual rotational speed of the second motor; a state-judging step of judging states of the first motor and the second motor by using the duty of the first motor, the duty of the second motor, a first saturation value that is set close to a duty value at which the rotational speed of the first motor becomes saturated, and a second saturation value that is set close to a duty value at which the rotational speed of the second motor becomes saturated; a rotational-speed-instruction changing step of increasing the rotational-speed instruction for the first motor by a predetermined amount, in a case in which the duty of the first motor is less than the first saturation value, the duty of the second motor is equal to or greater than the second saturation value, and the actual rotational speed of the second motor has not reached the rotational-speed instruction; and a driving-instruction generating step of setting, for the first motor, a duty based on the changed rotational-speed instruction and setting, for the second motor, a duty that is equal to or less than the second saturation value.

Advantageous Effects of Invention

With the present invention, there is an advantage in that it is possible to allow the individual motors to exhibit their capacities as fully as possible while suppressing a deterioration in the responsiveness of the rotational speed. Brief Description of Drawings

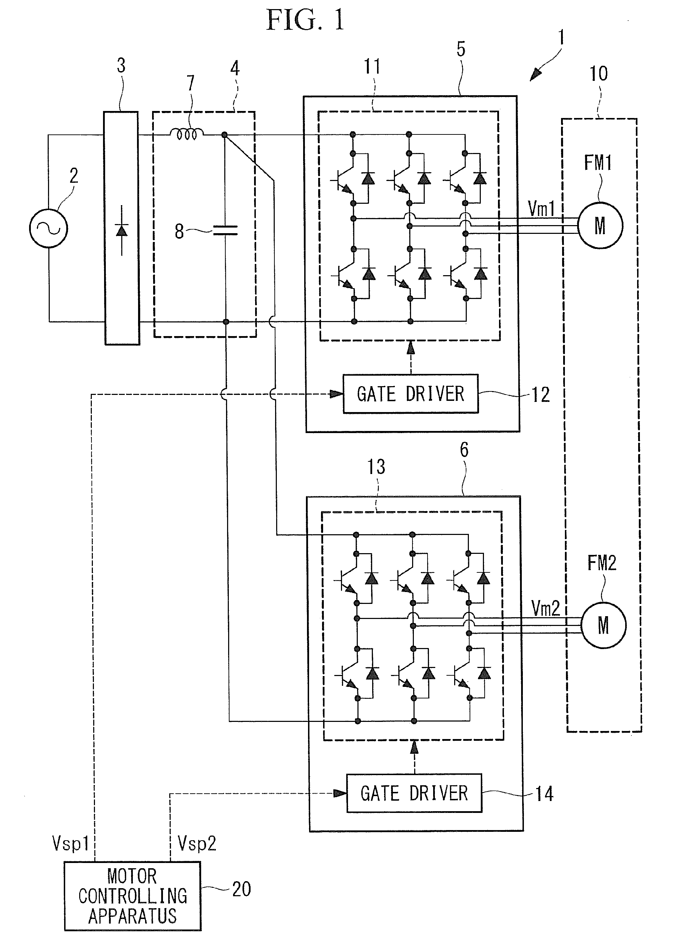

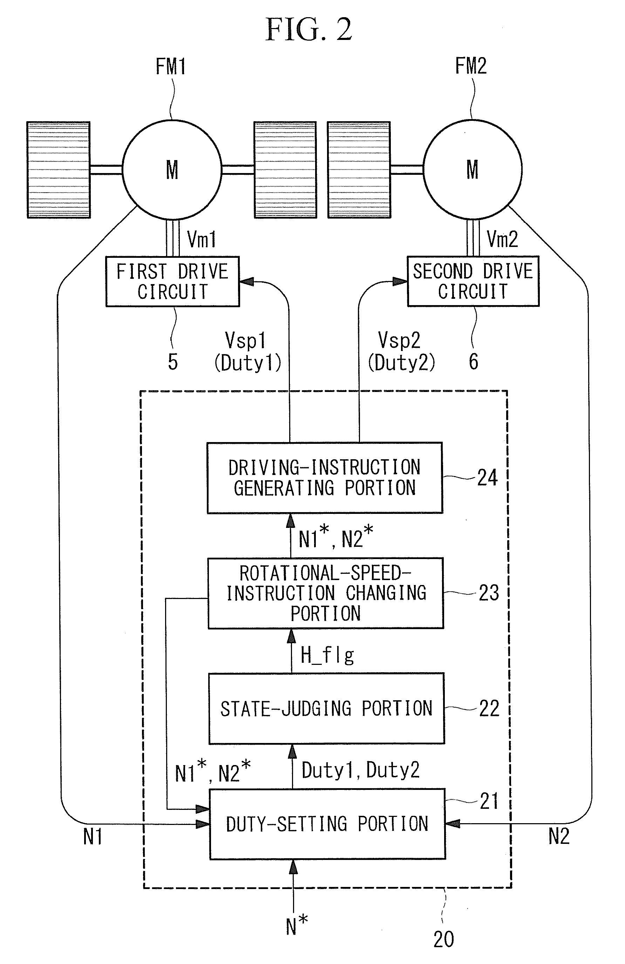

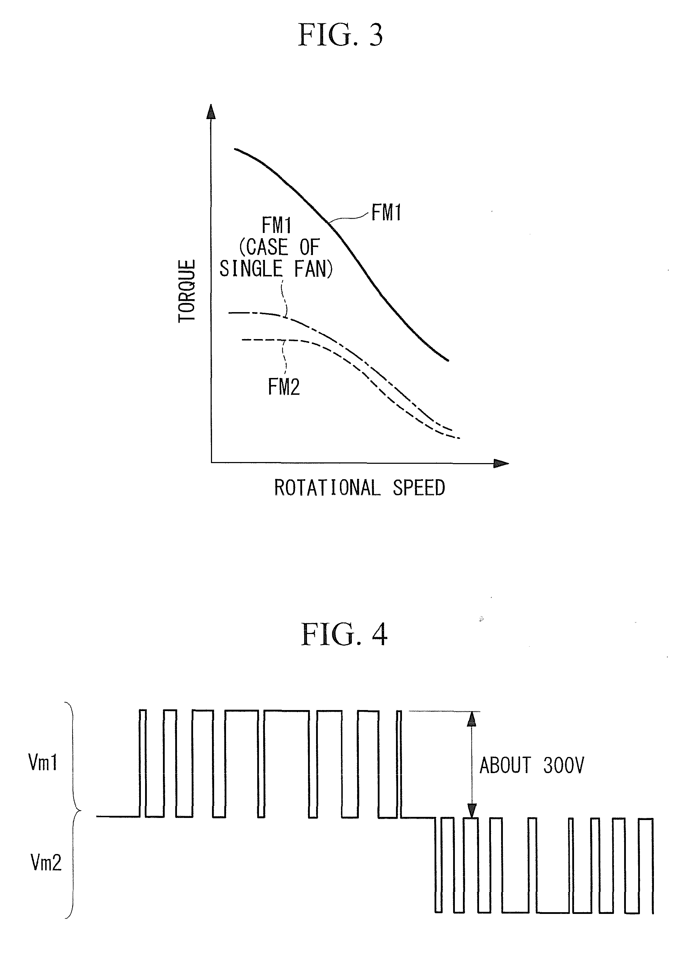

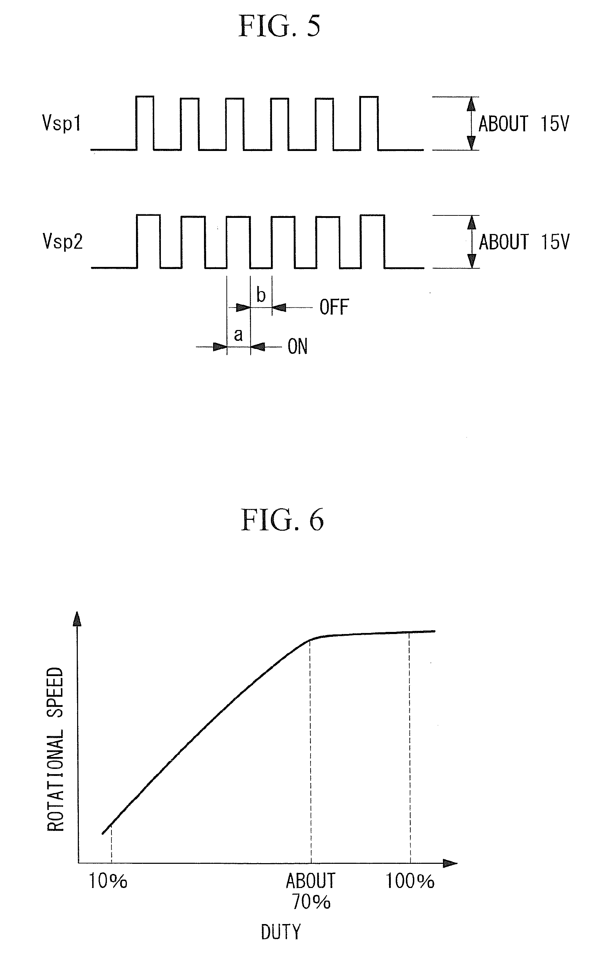

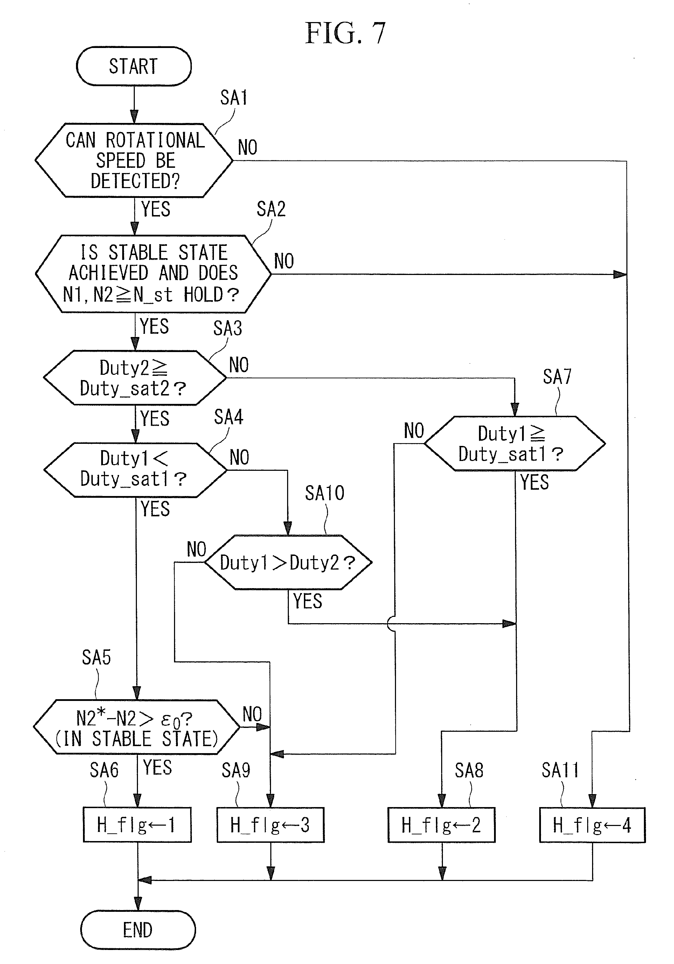

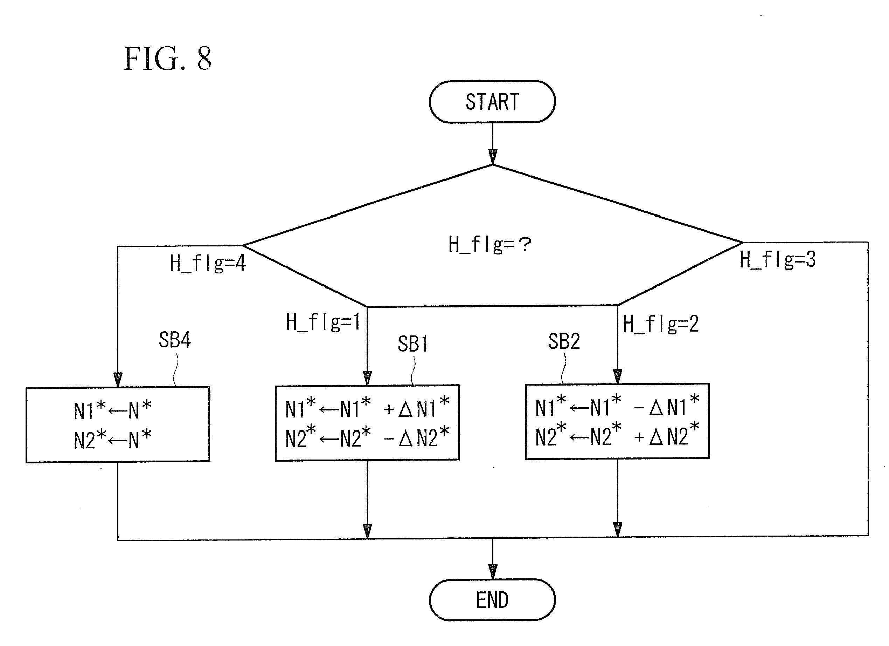

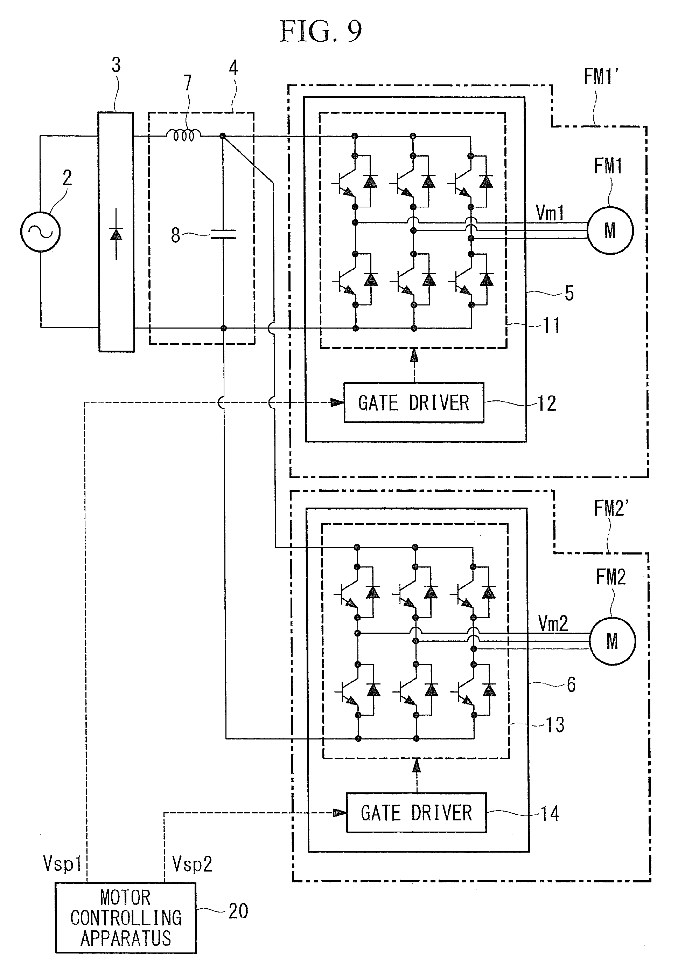

{Fig. 1} Fig. 1 is a diagram showing, in outline, the circuit configuration of a motor driving apparatus according to an embodiment of the present invention.
{Fig. 2} Fig. 2 is a functional block diagram of a motor controlling apparatus according to the embodiment of the present invention.
{Fig. 3} Fig. 3 is a diagram in which examples of rotational-speed/torque characteristics are compared between a first fan motor and a second fan motor according to the embodiment of the present invention.
{Fig. 4} Fig. 4 is a diagram showing example waveforms of AC voltages that are output from a first drive circuit and a second drive circuit to the first fan motor and the second fan motor, respectively, in Fig. 1.
{Fig. 5} Fig. 5 is a diagram showing example signal waveforms of voltage driving instructions that a controlling apparatus gives the first drive circuit and the second drive circuit, respectively, in Fig. 1.
{Fig. 6} Fig. 6 is a diagram showing an example of duty/rotational-speed characteristics of a fan motor.
{Fig. 7} Fig. 7 is a flowchart showing processing executed by a state-judging portion according to the embodiment of the present invention.
{Fig. 8} Fig. 8 is a flowchart showing processing executed by a rotational-speed-instruction changing portion according to the embodiment of the present invention.
{Fig. 9} Fig. 9 is a diagram showing, in outline, the circuit configuration of a motor driving apparatus according to another embodiment of the present invention.

{Description of Embodiment}

An embodiment for the case where a motor controlling apparatus and a motor controlling method according to the present invention are applied to a fan-motor driving apparatus of an air-conditioning system will be described below with reference to the drawings. Note that the motor controlling apparatus and the motor controlling method according to the present invention can widely be applied to control of a motor unit having a plurality of motors with different output characteristics, in addition to that of fan motors of an air-conditioning system (to be described later).

Fig. 1 is a diagram showing, in outline, the circuit configuration of the motor driving apparatus according to the embodiment of the present invention. As shown in Fig. 1, the motor driving apparatus 1 is a driving apparatus for driving a motor unit 10 provided with a first fan motor FM1 and a second fan motor FM2, and is provided with, as main components, a rectifier circuit 3 that converts AC voltage from an AC power source 2 to DC voltage, a smoothing circuit 4 that smooths the DC voltage output from the rectifier circuit 3, a first drive circuit 5 that converts the smoothed DC voltage to three-phase AC voltage and supplies it to the first fan motor FM1, a second drive circuit 6 that converts the smoothed DC voltage to three-phase AC voltage and supplies it to the second fan motor FM2, and a motor controlling apparatus 20 that gives a voltage driving instruction Vsp1 to the first drive circuit 5 and a voltage driving instruction Vsp2 to the second drive circuit 6.

The smoothing circuit 4 is provided with an inductor (coil) 7 and a smoothing capacitor 8. The first drive circuit 5 is provided with an inverter 11 constituted of six switching devices (for example, IGBTs) or the like and a gate driver 12 that gives gate-driving signals to the individual switching devices that constitute the inverter 11. Similarly, the second drive circuit 6 is provided with an inverter 13 and a gate driver 14 that gives gate-driving signals to individual switching devices that constitute the inverter 13.

With this embodiment, although a case in which the motor unit 10 is constituted of the first fan motor FM1 and the second fan motor FM2 is described as an example, the number of fan motors to be installed is not limited thereto. For example, three or more fan motors may be installed, and, in that case, drive circuits having a configuration similar to that of the first drive circuit 5 are individually provided in correspondence with the individual fan motors.

The second fan motor FM2 is a motor having a lower maximum output torque than the first fan motor FM1. For example, as shown in Fig. 2, the first fan motor FM1 has a configuration in which fans are attached to two shafts thereof, and the second fan motor FM2 has a configuration in which a fan is attached to only one shaft thereof. The first fan motor FM1 and the second fan motor FM2 are, for example, brushless DC motors.

Fig. 3 is a diagram in which examples of rotational-speed/torque characteristics are compared between the first fan motor FM1 and the second fan motor FM2. In Fig. 3, the lateral axis indicates the rotational speed, the vertical axis indicates the torque, the solid line indicates the characteristics of the first fan motor FM1, and the broken line indicates the characteristics of the second fan motor FM2. In addition, in Fig. 3, the one-dot-chain line indicates the rotational-speed/torque characteristics for a single fan computed from the characteristics of the first fan motor FM1.

In addition, in Fig. 1, AC voltages Vm1 and Vm2 to be output from the first drive circuit 5 and the second drive circuit 6 to the first fan motor FM1 and the second fan motor FM2, respectively, are assumed to be, for example, AC voltages whose amplitude is about 300 V, as shown in Fig. 4.

In addition, the voltage driving instructions Vsp1 and Vsp2 that the motor controlling apparatus 20 gives to the first drive circuit 5 and the second drive circuit 6, respectively, are assumed to be pulsed signals whose amplitude is about 15 V, as shown in Fig. 5. Here, Duty is a fraction of one cycle occupied by the ON state during one cycle and is expressed by Expression (1) below by using a and b in Fig. 5.

$$\text{Duty} = a/(a + b) \times 100 [\%] \qquad (1)$$

Fig. 2 is a functional block diagram of a motor controlling apparatus 20 according to this embodiment. The motor controlling apparatus 20 is, for example, a microcomputer provided with a processor, a main memory such as a RAM or the like, a computer-readable recording medium storing programs, and so forth. Then, the processor reads various programs stored in the recording medium out to the main memory to realize processing in various parts (to be described later).

As shown in Fig. 2, the motor controlling apparatus 20 is provided with, as main components, a duty-setting portion 21, a state-judging portion 22, a rotational-speed-instruction changing portion 23, and a driving-instruction generating portion 24.

First, the duty-setting portion 21 sets a rotational-speed instruction N*, which is given by a higher-level apparatus or the like, to serve as a rotational-speed instruction for the first fan motor FM1 (hereinafter referred to as the "first rotational-speed instruction N1*") and to serve as the initial value of the rotational-speed instruction for the second fan motor FM2 (hereinafter referred to as the "second rotational-speed instruction N2*"). Then, the duty-setting portion 21 sets Duty 1 of the first fan motor FM1 by using information about the first rotational-speed instruction N1* and an actual rotational speed N1 of the first fan motor FM1 and also sets Duty 2 of the second fan motor FM2 by using information about the second rotational-speed instruction N2* and an actual rotational speed N2 of the second fan motor FM2.

Note that, in the case in which the first rotational-speed instruction N1* and the second rotational-speed instruction N2* have been changed by the rotational-speed-instruction changing portion 23 (to be described later), Duty 1 and Duty 2 are set by comparing the changed first rotational-speed instruction N1* and second rotational-speed instruction N2* with the actual rotational speeds N1 and N2, respectively.

The duty-setting portion 21 sets Duty 1 and Duty 2 by using, for example, Expressions (2) and (3) below.

$$\text{Duty } 1(t + 1) = \text{Duty } 1(t) + k(N1^* - N1) \qquad (2)$$

$$\text{Duty } 2(t + 1) = \text{Duty } 2(t) + k'(N2^* - N2) \qquad (3)$$

In the above-described Expression (2), Duty 1(t + 1) is the duty of the first fan motor FM1 in the current processing cycle, Duty 1(t) is the duty of the first fan motor FM1 in the previous processing cycle, and k is a coefficient.

In the above-described Expression (3), Duty 2(t + 1) is the duty of the second fan motor FM2 in the current processing cycle, Duty 2(t) is the duty of the second fan motor FM2 in the previous processing cycle, and k' is a coefficient.

The state-judging portion 22 judges the states of the first fan motor FM1 and the second fan motor FM2 by using, among others, Duty 1 and Duty 2 set by the duty-setting portion 21, and a first saturation value Duty_sat1 and a second saturation value Duty_sat2, which will be described below.

Here, the first saturation value Duty_sat1 and the second saturation value Duty_sat2 are values that are determined based on the respective duty/rotational-speed characteristics of the first fan motor FM1 and the second fan motor FM2, and are set close to a minimum value in a duty range in which changes in the duty result in almost no change in the rotational speed. For example, Fig. 6 shows an example of the duty/rotational-speed characteristics of a fan motor. In the example shown in Fig. 6, in the region in which the duty is equal to or greater than about 70 %, there is almost no change in the rotational speed even if the duty changes. In this case, for example, a value close to 70 % will be set as the saturation value.

The state-judging portion 22 judges the states of the first fan motor FM1 and the second fan motor FM2, for example, by executing processing shown in Fig. 7, and sets a flag H_flg in accordance with the states thereof. The processing performed by the state-judging portion 22 will be described below with reference to Fig. 7. Fig. 7 is a flowchart showing the processing executed by the state-judging portion 22.

First, it is judged whether or not the rotational speed of the first fan motor FM1 and that of the second fan motor FM2 are normally detected (step SA1). If, as a result thereof, the rotational speed is not detected ("NO" in step SA1), the flag H_flg is set to "4" (step SA11).

On the other hand, in the case in which the rotational speed is normally detected ("YES" in step SA1), it is judged whether or not a stable state is achieved, and it is also judged whether or not an actual rotational speed N1 of the first fan motor FM1 (hereinafter referred to as the "first actual rotational speed N1") and an actual rotational speed N2 of the second fan motor FM2 (hereinafter referred to as the "second actual rotational speed N2") are both equal to or greater than a processing-starting rotational speed N_st. Here, a stable state refers to, for example, a state in which the rotational-speed instruction N* remains unchanged continuously for a predetermined period of time. If, as a result thereof, the stable state is not achieved or one of the first actual rotational speed N1 and the second actual rotational speed N2 falls below the processing-starting rotational speed N_st ("NO" in step SA2), the flag H_flg is set to "4" (step SA11).

On the other hand, in the case in which, in step SA2, the stable state is achieved and, also, the first actual rotational speed N1 and the second actual rotational speed N2 are both equal to or greater than the processing-starting rotational speed N_st ("YES" in step SA2), it is judged whether or not Duty 2 set by the duty-setting portion 21 is equal to or greater than the second saturation value Duty_sat2 (step SA3). If, as a result, Duty 2 is equal to or greater than the second saturation value Duty_sat2, it is judged whether or not Duty 1 set by the duty-setting portion 21 is less than the first saturation value Duty_sat1 (step SA4).

If, as a result thereof, Duty 1 is less than the first saturation value Duty_sat1 ("YES" in step SA4), it is judged whether or not a deviation between the second actual rotational speed N2 and the second rotational-speed instruction N2* in the stable state is greater than a predetermined value $\varepsilon_0$ (step SA5). In other words, it is judged whether or not the second actual rotational speed N2 has reached the second rotational-speed instruction N2*. If, as a result thereof, the deviation is greater than the predetermined value $\varepsilon_0$, that is, in the case in which the second actual rotational speed N2 has not reached the second rotational-speed instruction, the flag H_flg is set to "1"

(step SA6).

Next, in the case in which Duty 2 is less than the second saturation value Duty_sat2 in the above-described step SA3 ("NO" in step SA3), it is judged whether or not Duty 1 set by the duty-setting portion 21 is equal to or greater than the first saturation value Duty_sat1 (step SA7). If, as a result thereof, Duty 1 is equal to or greater than the first saturation value Duty_sat1 ("YES" in step SA7), the flag H_flg is set to "2" (step SA8).

On the other hand, in the case in which Duty 1 is less than the first saturation value Duty_sat1 in step SA7 ("NO" in step SA7), the flag H_flg is set to "3" (step SA9).

In addition, in the case in which Duty 1 is equal to or greater than the first saturation value Duty_sat1 in step SA4 ("NO" in step SA4), it is judged whether or not Duty 1 is greater than Duty 2 (step SA10), and, if, as a result thereof, Duty 1 is greater than Duty 2 ("YES" in step SA10), the flag H_flg is set to "2" (step SA8). On the other hand, in the case in which Duty 1 is equal to or less than Duty 2 in step SA10 ("NO" in step SA10), the flag H_flg is set to "3" (step SA9) .

The rotational-speed-instruction changing portion 23 changes the first rotational-speed instruction N1* and the second rotational-speed instruction N2* in accordance with the flag set by the state-judging portion 22. The processing executed by the rotational-speed-instruction changing portion 23 will be described below with reference to Fig. 8. Fig. 8 is a flowchart showing the processing executed by the rotational-speed-instruction changing portion 23.

In the case in which the flag H_flg is set to "1" by the state-judging portion 22, the rotational-speed-instruction changing portion 23 increases the first rotational-speed instruction N1* by a predetermined amount, also decreases the second rotational-speed instruction N2* by the predetermined amount, and outputs the changed first rotational-speed instruction N1* and second rotational-speed instruction N2* to the driving-instruction generating portion 24 (step SB1).

In addition, in the case in which the flag H_flg is set to "2" by the state-judging portion 22, the first rotational-speed instruction N1* is decreased by the predetermined amount, the second rotational-speed instruction N2* is also increased by the predetermined amount, and the changed first rotational-speed instruction N1* and second rotational-speed instruction N2* are output to the driving-instruction generating portion 24 (step SB2).

In addition, in the case in which the flag H_flg is set to "3" by the state-judging portion 22, the first rotational-speed instruction N1* and the second rotational-speed instruction N2* are not changed, and the current first rotational-speed instruction N1* and second rotational-speed instruction N2* are output to the driving-instruction generating portion 24.

In addition, in the case in which the flag H_flg is set to "4" by the state-judging portion 22, the rotational-speed instruction N* is set to both the first rotational-speed instruction N1* and the second rotational-speed instruction N2*, and the changed first rotational-speed instruction N1* and second rotational-speed instruction N2* are output to the driving-instruction generating portion 24 (step SB4). In addition, the rotational-speed-instruction changing portion 23 outputs the most recent first rotational-speed instruction N1* and second rotational-speed instruction N2* to the duty-setting portion 21. By doing so, in the next processing cycle, the above-described processing is repeated by using the first rotational-speed instruction N1* and the second rotational-speed instruction N2* that have been input from the rotational-speed-instruction changing portion 23.

The driving-instruction generating portion 24 sets the respective Duty 1 and Duty 2 based on the first rotational-speed instruction N1* and the second rotational-speed instruction N2* that have been output from the rotational-speed-instruction changing portion 23, and outputs them to the first drive circuit 5 and the second drive circuit 6 as the voltage driving instructions Vsp1 and Vsp2, respectively. The driving-instruction generating portion 24 possesses, for example, information in which the rotational-speed instruction is associated with the duty (for example, see Fig. 6), and, by using this as the initial value, feeds back the actual rotational speed, thus increasing/decreasing the duty based on the deviation between the actual rotational speed and the instructed rotational speed, and sets the duties in accordance with the first rotational-speed instruction N1* and the second rotational-speed instruction N2*.

Next, the operation of the motor driving apparatus 1 according to this embodiment will be described.

First, the AC voltage from the AC power source 2 is converted to a DC voltage by the rectifier circuit 3. The DC voltage is smoothed by the smoothing circuit 4, and is output to the first driving apparatus 5 and the second driving apparatus 6.

At the first drive circuit 5 and the second drive circuit 6, the inverters 11 and 13 are individually driven based on gate-driving signals, which are PWM signals corresponding to the voltage driving instructions Vsp1 and Vsp2 given by the motor controlling apparatus 20, and thus, the smoothed DC voltages are converted to AC voltages Vm1 and Vm2, which are given to the first fan motor FM1 and the second fan motor FM2, respectively. By doing so, the first fan motor FM1 and the second fan motor FM2 are rotated at rotational speeds in accordance with the AC voltages Vm1 and Vm2.

The first actual rotational speed N1 of the first fan motor FM1 and the second actual rotational speed N2 of the second fan motor FM2 are detected by a rotational-speed detecting portion (not shown), and are output to the motor controlling apparatus 20.

At the motor controlling apparatus 20, various processing is performed by using the first actual rotational speed N1, the second actual rotational speed N2, and the rotational-speed instruction N*. Specifically, the duty-setting portion 21 sets Duty 1 based on the deviation between the first actual rotational speed N1 and the first rotational-speed instruction N1*, and sets Duty 2 based on the deviation between the second actual rotational speed N2 and the second rotational-speed instruction N2*.

Then, at the state-judging portion 22, by executing the above-described processing shown in Fig. 7, the current states of the first fan motor FM1 and second fan motor FM2 are judged, and the flag H_flg is set in accordance with the states thereof.

Then, at the rotational-speed-instruction changing portion 23, the first rotational-speed instruction N1* and the second rotational-speed instruction N2* are changed in accordance with the flag H_flg set by the state-judging portion 22, and, at the driving-instruction generating portion 24, the duties based on the first rotational-speed instruction N1* and the second rotational-speed instruction N2* from the rotational-speed-instruction changing portion 23 are set, and these are output to the first drive circuit 5 and the second drive circuit 6 in the form of the voltage driving instructions Vsp1 and Vsp2.

As has been described above, with the motor controlling apparatus 20 and the motor controlling method according to this embodiment, in the case in which the flag H_flg is set to "1" by the state-judging portion 22, that is, in the case in which Duty 2 of the second fan motor FM2 is equal to or greater than the second saturation value, Duty 1 of the first fan motor FM1 is less than the first saturation value, and, also, the deviation between the second actual rotational speed N2 and the rotational-speed instruction N* in the stable state is greater than the predetermined value $\varepsilon_0$, the rotational-speed-instruction changing portion 23 increases the first rotational-speed instruction N1* by the predetermined amount and decreases the second rotational-speed instruction N2* by the predetermined amount.

As described above, in the state in which the Duty 2 of the second fan motor FM2 has reached the second saturation value Duty_sat2, and thus, it is not possible to increase the rotational speed of the second fan motor FM2 any further even if the Duty 2 is increased further, because the rotational-speed instruction N2* for the second fan motor FM2 is decreased, it is possible to maintain Duty 2 of the second fan motor FM2 close to the second saturation value. Accordingly, for example, in the case in which the rotational-speed instruction N* is decreased, it is possible to decrease the rotational speed of the second fan motor FM2 so as to quickly follow this change in the rotational-speed instruction N*. Accordingly, it is possible to suppress a deterioration in the rotational-speed response characteristics of the second fan motor FM2.

Furthermore, in the state in which the flag H_flg is set to "1", because the rotational-speed instruction N1* of the first fan motor FM1 is increased, it is possible to make the first fan motor FM1 make up for the shortfall in the output of the second fan motor FM2. By doing so, it is possible to increase the output of the first fan motor FM1 even in the case in which the second fan motor FM2 has approached the limit of its capacity, and thus, it is possible to avoid a situation in which the output of the first fan motor FM1 is suppressed due to the influence of the capacity of the second fan motor FM2. Accordingly, in a high-load region, it is possible to allow the first fan motor FM1 to achieve an output at its full capacity.

In addition, in the case in which the flag H_flg is set to "2" by the state-judging portion 22, that is, in the case in which Duty 2 of the second fan motor FM2 is less than the second saturation value ("NO" in step SA3) and Duty 1 of the first fan motor FM1 is equal to or greater than the first saturation value ("YES" in step SA7) or in the case in which Duty 2 of the second fan motor FM2 is equal to or greater than the second saturation value ("YES" in step SA3), Duty 1 of the first fan motor FM1 is equal to or greater than the first saturation value ("NO" in step SA4), and Duty 1 is greater than Duty 2 ("YES" in step SA10), the rotational-speed-instruction changing portion 23 decreases the first rotational-speed instruction N1* by the predetermined amount and, also, increases the second rotational-speed instruction N2* by the predetermined amount.

By doing so, for example, when the state in which the flag H_flg is set to "1" continues, the load burden on the first fan motor FM1 increases, whereas the load burden on the second fan motor FM2 decreases, and in the case in which the balance of these load burdens is about to be lost, because the first rotational-speed instruction N1* is decreased by the predetermined amount and the second rotational-speed instruction N2* is increased by the predetermined amount, it is possible to maintain a preferable load-distribution balance between the first fan motor FM1 and the second fan motor FM2.

In addition, in the case in which the flag H_flg is set to "3" by the state-judging portion 22, that is, in the case in which Duty 2 of the second fan motor FM2 is less than the second saturation value ("NO" in step SA3) and Duty 1 of the first fan motor FM1 is less than the first saturation value ("NO" in step SA7), in the case in which Duty 2 of the second fan motor FM2 is equal to or greater than the second saturation value ("YES" in step SA3), Duty 1 of the first fan motor FM1 is equal to or greater than the first saturation value ("NO" in step SA4), and Duty 2 is equal to or greater than Duty 1 ("NO" in step SA10), or in the case in which Duty 2 of the second fan motor FM2 is equal to or greater than the second saturation value ("YES" in step SA3) and Duty 1 of the first fan motor FM1 is less than the first saturation value ("YES" in step SA4), and the deviation between the second actual rotational speed N2 and the rotational-speed instruction N* in the stable state is less than the predetermined value $\varepsilon_0$, the rotational-speed-instruction changing portion 23 does not change the rotational-speed instruction, and thus, the current rotational-speed instruction N1* and rotational-speed instruction N2* are maintained.

As has been described above, in the case in which the flag H_flg is set to "3" by the state-judging portion 22, because the load ratio of the first fan motor FM1 and the load ratio of the second fan motor FM2 can be assumed to be in a balanced state, it is possible to maintain stable control by maintaining the current rotational-speed instructions.

In addition, with the motor controlling apparatus 20 and the motor controlling method according to this embodiment, because the motor control is performed based on the first actual rotational speed N1 and the second actual rotational speed N2, the need to detect voltage and current can be eliminated. Accordingly, it is not necessary to provide a voltage sensor and a current sensor, and thus, it is possible to simplify the circuits.

The present invention is not limited to the above-described embodiment, and various modifications are possible within a range that does not depart from the scope of the invention.

For example, although the above-described embodiment employs drive circuits in which the inverters 11 and 13 and the gate drivers 12 and 14 are externally installed, the inverters 11 and 13 and the gate drivers 12 and 14 need not necessarily be externally installed. For example, as shown in Fig. 9, a built-in type first fan motor unit FM1' in which the first fan motor FM1 and the first drive circuit 5 are integrated may be employed. Similarly, with regard to the second fan motor FM2 also, a second fan motor unit FM2' that is integrated with the second drive circuit 6 may be employed.

{Reference Signs List}

   1 motor driving apparatus
   5 first drive circuit
   6 second drive circuit
   10 motor unit
   11, 13 inverter
   12, 14 gate driver
   20 motor controlling apparatus
   21 duty-setting portion
   22 state-judging portion
   23 rotational-speed-instruction changing portion
   24 driving-instruction generating portion
   FM1 first fan motor
   FM2 second fan motor
   FM1' first fan motor unit
   FM2' second fan motor unit

**Claims**

1.  A motor controlling apparatus (20) employable in controlling a motor unit (10) provided with a first motor (FM1) and a second motor (FM2) whose maximum output torque is lower than that of the first motor (TM1), the motor controlling apparatus (20) comprising:

    a duty-setting means (21) configured to set a duty of the first motor (FM1) by using information about a rotational-speed instruction and an actual rotational speed of the first motor (FM1) and to set a duty of the second motor (FM2) by using information about the rotational-speed instruction and an actual rotational speed of the second motor (FM2);
    a state-judging means (22) configured to judge states of the first motor (FM1) and the second motor (FM2) by using the duty of the first motor (FM1), the duty of the second motor (FM2), a first saturation value that is set close to a duty value at which the rotational speed of the first motor (FM1) becomes saturated, and a second saturation value that is set close to a duty value at which the rotational speed of the second motor (FM2) becomes saturated;
    a rotational-speed-instruction changing means (23) configured to increase the rotational-speed instruction for the first motor (FM1) by a predetermined amount, in a case in which the duty of the first motor (FM1) is less than the first saturation value, the duty of the second motor (FM2) is equal to or greater than the second saturation value, and the actual rotational speed of the second motor (FM2) has not reached the rotational-speed instruction; and
    a driving-instruction generating means (24) configured to set, for the first motor, a duty based on the changed rotational-speed instruction and to set, for the second motor, a duty that is equal to or less than the second saturation value.

2.  A motor controlling apparatus according to Claim 1,

wherein the rotational-speed-instruction changing means (23) is configured to decrease the rotational-speed instruction for the second motor (FM2) by the predetermined amount, in a case in which the duty of the second motor (FM2) is equal to or greater than the second saturation value and an actual rotational speed of the second motor (FM2) has not reached the rotational-speed instruction, and
the driving-instruction generating means (24) is configured to set, for the second motor (FM2), a duty based on the changed rotational-speed instruction.

3. A motor controlling apparatus according to Claim 1 or 2,
wherein the rotational-speed-instruction changing means (23) is configured to decrease the rotational-speed instruction for the first motor (FM1) by the predetermined amount and increases the rotational-speed instruction for the second motor (FM2) by the predetermined amount, in the case in which the duty of the first motor (FM1) is equal to or greater than the first saturation value and the duty of the second motor (FM2) is less than the second saturation value or in the case in which the duty of the first motor (FM1) is equal to or greater than the first saturation value, the duty of the second motor (FM2) is equal to or greater than the second saturation value, and the duty of the first motor (FM1) is greater than the duty of the second motor (FM2).

4. A motor driving apparatus (1) comprising:

   a motor controlling apparatus (20) according to any one of Claims 1 to 3;
   a first drive circuit (5) for driving the first motor (FM1) based on a driving instruction from the motor controlling apparatus (20); and
   a second drive circuit (6) for driving the second motor (FM2) based on a driving instruction from the motor controlling apparatus (20).

5. An air conditioner comprising:

   a motor unit (10) provided with a first motor (FM1) and a second motor (FM2) whose maximum output torque is lower than that of the first motor (FM1); and
   a motor driving apparatus (20) according to Claim 4.

6. A motor controlling method applied to a motor unit (10) provided with a first motor (FM1) and a second motor (FM2) whose maximum output torque is lower than that of the first motor (FM1), the motor controlling method comprising:

   a duty setting step of setting a duty of the first motor (FM1) by using information about a rotational-speed instruction and an actual rotational speed of the first motor (FM1) and setting a duty of the second motor (FM2) by using information about the rotational-speed instruction and an actual rotational speed of the second motor (FM2);
   a state-judging step of judging states of the first motor (FM1) and the second motor (FM2) by using the duty of the first motor (FM1), the duty of the second motor (FM2), a first saturation value that is set close to a duty value at which the rotational speed of the first motor (FM1) becomes saturated, and a second saturation value that is set close to a duty value at which the rotational speed of the second motor (FM2) becomes saturated;
   a rotational-speed-instruction changing step of increasing the rotational-speed instruction for the first motor (FM1) by a predetermined amount, in a case in which the duty of the first motor (FM1) is less than the first saturation value, the duty of the second motor (FM2) is equal to or greater than the second saturation value, and the actual rotational speed of the second motor (FM2) has not reached the rotational-speed instruction; and
   a driving-instruction generating step of setting, for the first motor (FM1), a duty based on the changed rotational-speed instruction and setting, for the second motor (FM2), a duty that is equal to or less than the second saturation value.

# FIG. 1

# FIG. 2

# FIG. 3

FM1
(CASE OF
SINGLE FAN)

FM1

FM2

TORQUE

ROTATIONAL SPEED

# FIG. 4

Vm1

Vm2

ABOUT 300V

# FIG. 5

Vsp1

Vsp2

ABOUT 15V

ABOUT 15V

b — OFF

a — ON

# FIG. 6

ROTATIONAL SPEED

10%    ABOUT 70%    100%

DUTY

# FIG. 7

START

SA1
CAN ROTATIONAL SPEED BE DETECTED? — NO
↓ YES

SA2
IS STABLE STATE ACHIEVED AND DOES N1, N2≧N_st HOLD ? — NO
↓ YES

SA3
Duty2≧ Duty_sat2 ? — NO
↓ YES

SA4
Duty1< Duty_sat1 ? — NO
↓ YES

SA7
Duty1≧ Duty_sat1 ?
NO / YES

SA10
Duty1>Duty2 ?
NO / YES

SA5
N2*−N2> $\varepsilon_0$ ?
(IN STABLE STATE) — NO
YES

SA6 H_flg←1

SA9 H_flg←3

SA8 H_flg←2

SA11 H_flg←4

END

FIG. 8

START

H_flg=?

H_flg=4          H_flg=3

H_flg=1          H_flg=2

SB4

$N1^* \leftarrow N^*$
$N2^* \leftarrow N^*$

SB1

$N1^* \leftarrow N1^* + \triangle N1^*$
$N2^* \leftarrow N2^* - \triangle N2^*$

SB2

$N1^* \leftarrow N1^* - \triangle N1^*$
$N2^* \leftarrow N2^* + \triangle N2^*$

END

EP 2 993 778 A1

# FIG. 9

Europäisches
Patentamt
European
Patent Office
Office européen
des brevets

# EUROPEAN SEARCH REPORT

Application Number

EP 15 18 1467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/103590 A1 (SATO TOSHIAKI [JP] ET AL) 3 May 2012 (2012-05-03) <br> * paragraph [0078]; figures 2,7 * <br> * paragraph [0100] - paragraph [0108] * <br> * paragraph [0075] - paragraph [0077] * <br> ----- | 1-6 | INV. <br> H02P5/74 <br> H02P27/08 <br> F24F1/00 |
| A,D | JP 2013 174371 A (MITSUBISHI HEAVY IND LTD) 5 September 2013 (2013-09-05) <br> * the whole document * <br> ----- | 1-6 | |

TECHNICAL FIELDS
SEARCHED      (IPC)

H02P
F24F

The present search report has been drawn up for all claims

| Place of search | Date of completion of the search | Examiner |
|---|---|---|
| Munich | 13 January 2016 | Schürle, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 993 778 A1**

## ANNEX TO THE EUROPEAN SEARCH REPORT
## ON EUROPEAN PATENT APPLICATION NO.

EP 15 18 1467

13-01-2016

| Patent document cited in search report | Publication date | Patent family member(s) | Publication date |
|---|---|---|---|
| US 2012103590 A1 | 03-05-2012 | CN 101675250 A | 17-03-2010 |
| | | CN 102384100 A | 21-03-2012 |
| | | EP 2163768 A1 | 17-03-2010 |
| | | JP 4254885 B2 | 15-04-2009 |
| | | JP 2008291656 A | 04-12-2008 |
| | | US 2010226792 A1 | 09-09-2010 |
| | | US 2012103590 A1 | 03-05-2012 |
| | | WO 2008143231 A1 | 27-11-2008 |
| JP 2013174371 A | 05-09-2013 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2013174371 A